# EUROPEAN PATENT APPLICATION

(11) **EP 4 257 389 A1**
(43) Date of publication of application: **11.10.2023**
(21) Application number: 23166951.6
(22) Date of filing: 06.04.2023
(51) Int. Cl.: B60K 1/00, B60K 17/346, B60K 17/348, B60K 17/36

(54) **IMPROVED TORQUE DISTRIBUTION SYSTEM AMONG AXLES OF A HEAVY VEHICLE**

(30) Priority: 07.04.2022 IT 202200006971
(71) Applicant: IVECO S.P.A., 10156 Torino (IT); On-Highway Brasil Ltda., 35.703-138 Sete Lagoas, Minas Gerais (BR)
(72) Inventor: PEREIRA DE LEMOS, Josè Francivaldo, 10156 TORINO (IT); LOO, Wing, 35.703-138 SETE LAGOAS, MINAS GERAIS (BR)
(74) Representative: Studio Torta S.p.A.

(57) **Abstract**

Torque distributor system (5) for distributing the torque coming from a power source (1) of a vehicle to a plurality of axles (2a, 2b, 2c, 2d) of the vehicle, comprising a casing (6) adapted to define a space (7) configured to house a transmission (8), the casing (6) defining a plurality of openings (9, 10, 11, 12, 13, 14) configured to house respective power take-offs (15, 16, 17, 18, 19, 20) connected to each other by the transmission (8), a first power take-off (15) of the power take-offs (15, 16, 17, 18, 19, 20) being connectable to the power source (1) and at least a second (19) of the power take-offs (15, 16, 17, 18, 19, 20) being connectable to one or more of the axles (2a, 2b, 2c, 2d), the power take-offs (15, 16, 17, 18) being coaxial in pairs along respective axes (A, B), and being in pairs arranged on opposite sides to one of said axles (2a, 2b, 2c, 2d).

## Description

### CROSS-REFERENCE TO RELATED APPLICATIONS

This patent application claims priority from Italian patent application no. 102022000006971 filed on April 7, 2022, the entire disclosure of which is incorporated herein by reference.

### TECHNICAL FIELD

The present invention relates to a torque distributor system for a heavy vehicle.

The present invention is preferably, although not exclusively, applied to the distribution of torque between axles of a heavy vehicle, such as a truck. In the following, reference will be made to such application by way of example.

### STATE OF THE PRIOR ART

As is known, heavy vehicles comprise a power assembly configured to provide torque to one or more axles of the vehicle. An example of such power assembly can be an internal combustion engine, a fuel cell engine or an electric or hybrid motor assembly.

In particular, the torque is distributed by means of a transmission to the one or more axles of the vehicle, as is known. However, such transmission is specifically designed for a single drive configuration.

Therefore, if wanting to change the drive mode from single axle or multiple axles, it is necessary to redesign the transmission.

Furthermore, the current transmissions are particularly bulky and heavy if they require having to divide the torque to a plurality of axles.

Therefore, there is a felt need to provide a system for distributing the torque from a power source of a vehicle to one or more axles which is versatile, compact and cost-effective.

The object of the present invention is to satisfy the above-described needs in an optimized and cost-effective manner.

### SUMMARY OF THE INVENTION

The aforementioned object is achieved by a torque distributor system as claimed in the appended claims.

### BRIEF DESCRIPTION OF THE DRAWINGS

In order to better understand the present invention, a preferred embodiment is described in the following, by way of non-limiting example and with reference to the accompanying drawings wherein:
- Figure 1 is a schematic view of a power source system for a heavy vehicle utilized in a configuration having two drive axles;
- Figure 2 is a section view of a distributor system according to a first embodiment of the invention in the configuration of Figure 1;
- Figure 3 is a section view of a distributor system according to a second embodiment of the invention in the configuration of Figure 1;
- Figure 4 is a schematic view of a power source system for a heavy vehicle utilized in a configuration having three drive axles;
- Figure 5 is a section view of a distributor system according to a first embodiment of the invention in the configuration of Figure 4;
- Figure 6 is a section view of a distributor system according to a second embodiment of the invention in the configuration of Figure 4;
- Figure 7 is a schematic view of a power source system for a heavy vehicle utilized in a configuration having three drive axles;
- Figure 8 is a section view of a distributor system according to a first embodiment of the invention in the configuration of Figure 7; and
- Figure 9 is a section view of a distributor system according to a second embodiment of the invention in the configuration of Figure 7.

### DETAILED DESCRIPTION OF THE INVENTION

The accompanying figures schematically illustrate a power assembly 1 configured to transmit torque through a mechanical chain to a plurality of axles 2a, 2b, 2c and 2d of a heavy vehicle (not illustrated), such as a tractor or a truck.

The power assembly 1 can be an internal combustion engine, a fuel cell system or a hybrid drive system, as known in the art.

The power assembly 1 is connected to at least one axle by means of a transmission 3, adapted to select a specific speed change, a plurality of rotating shafts 4a, 4b, 4c, 4d and a torque distributor system 5 according to the invention.

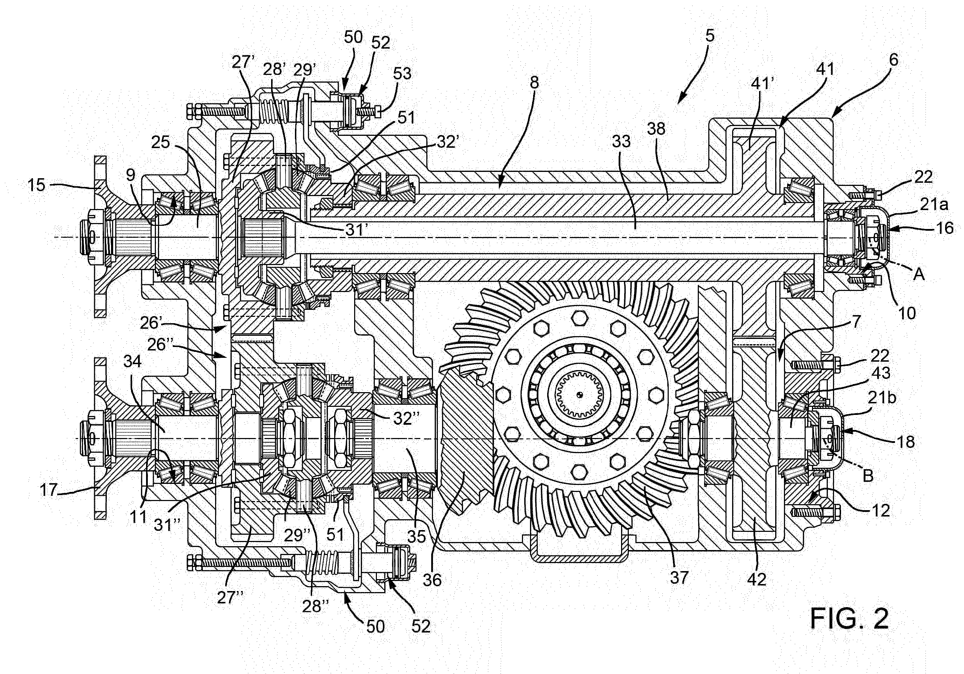

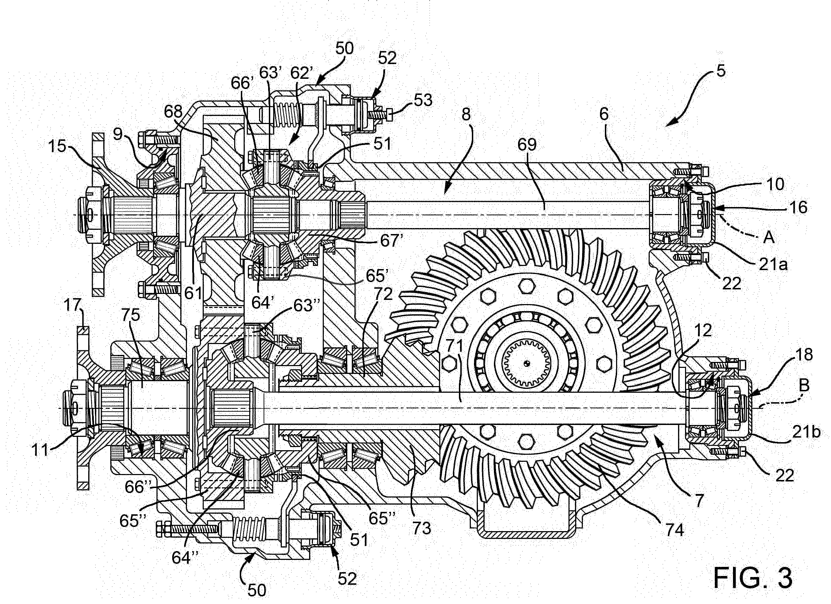

Figures 2 and 3 illustrate a configuration having two drive axles 4a, 4b where the torque distributor 5 is connected by a first rotating shaft 4a to the power assembly 1, in the described case by means of the transmission 3, and where a first axle 2a is connected by a second rotating shaft 4b.

In both embodiments, the torque distributor 5 comprises a casing 6 adapted to be supported by a fixed portion to the vehicle frame (not illustrated) defining a space 7 and a transmission assembly 8 housed inside the space 7.

Clearly, the casing 6 is advantageously built by several parts rigidly connected to each other in order to enable assembling the transmission assembly 8 in the space 7.

The casing 6 defines a plurality of openings 9, 10, 11, 12 configured to allow the passage of respective power take-offs 15, 16, 17, 18, as is better described in the following, connected to each other by the transmission 8.

More specifically, the distributor system 5 defines four openings and respective power take-offs, preferably coaxial to each other in pairs. In particular, the first and the second opening 9, 10 and the first and second power take-offs 15, 16 are coaxial to an axis A, whereas the third and the fourth opening 11, 12 and the third and fourth power take-offs 17, 18 are coaxial to an axis B.

Advantageously, the axes A and B are parallel to each other and even more preferably are parallel to a longitudinal axis of the vehicle.

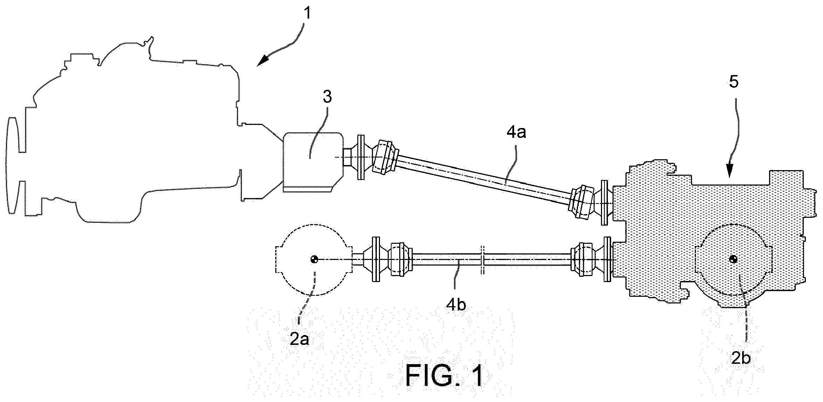

In the embodiment of Figures 2 and 3, corresponding to the use of Figure 1, where there are two drive axles, two power take-offs 15, 17 communicate with the external environment, whereas two power take-offs 16, 18 are separated from the external environment by means of covers 21a, 21b fixed to the casing 6 by means of connecting means 22, such as threaded elements.

In particular, in the described embodiment, the rotating shaft 4a is connected to the power take-off 15 and the power take-off 17 is connected to the axle 2a and to the axle 2b, as described in the following, by means of the transmission 8.

According to the embodiment of Figure 2, the transmission 8 comprises a first support shaft 25 integrally connected to the first power take-off 15. The first support shaft 25 is connected by means of a pair of differential mechanisms 26', 26" to the second and third power take-offs 16, 17.

In particular, each differential mechanism 26', 26" comprises a carrier 27', 27'' defining a housing inside which a plurality of satellites 29', 29" is housed carried in a rotationally free manner by respective pins 28', 28" integral with the carrier 27', 27". In particular, the carriers 27', 27'' are configured to mesh with each other by means of respective toothing integral with them.

Each differential mechanism 26', 26" comprises a pair of gear wheels 31', 31", 32', 32'' each configured to mesh with the satellites 29', 29".

In particular, a first gear wheel 31' of the first differential mechanism 26' is carried integrally in rotation by a second support shaft 33 integrally connected to the second power take-off 16, whereas a second gear wheel 32' of the first differential mechanism 26' is operatively connected to the fourth power take-off 18, as is described in the following.

A first gear wheel 31'' of the second differential mechanism 26' is carried integral with the rotation by a third support shaft 34 integrally connected to the third power take-off 17, whereas a second gear wheel 32" of the second differential mechanism 26" is carried integral with the rotation by a fourth support shaft, operatively connected to a fourth support shaft 35 provided with a gear wheel 36 adapted to mesh a toothing 37 so as to transfer the torque to the second axle 2b. In particular, the second carrier 27" is configured to allow the passage of the shaft 34 through it.

Referring again to the second gear wheel 32' of the first differential mechanism, it is carried integral with the rotation by a fifth support shaft 38, advantageously coaxial and housed externally with respect to the second support shaft 33.

The fifth support shaft 38 is operatively connected by a gear 41 to a sixth support shaft 43. In particular, the gear 41 comprises a gear wheel 41', integral with the rotation at the fifth support shaft 38 and a second gear wheel 41'' integral with the sixth support shaft 43. The latter is rigidly connected to the fourth power take-off 18.

In particular, the second and the fifth support shaft 33, 38 extend along the axis A above the second axle 2b so as to operatively connect the first and third power take-offs 15, 17 and the second and fourth power take-offs 16, 18 which are arranged on opposite sides with respect to the axle 2b.

The transmission 8 also comprises locking means 50 configured to lock the first and/or second differential mechanism 26', 26". In particular, the locking means 50 are housed in the space 7.

Very briefly, the locking means 50 comprise a sleeve 51 actuated by actuator means 52 and configured to cooperate in contact with an element of the differential 26', 26" for locking the function thereof, i.e. for making each element thereof rotate at the same speed.

In the illustrated exemplifying embodiment, the locking means 50 for the first differential mechanism 26' comprise a movable sleeve 51 so as to assume a first condition in which it does not cooperate with the carrier 27' and a second condition in which it cooperates with the carrier 27' for making it selectively integral with the second gear wheel 32' .

Whereas, the locking means 50 for the second differential mechanism 26'' comprise a movable sleeve 51 so as to assume a first condition in which it does not cooperate with the carrier 27'' and a second condition in which it cooperates with the carrier 27'' for making it selectively integral with the second gear wheel 32".

The actuator means 52 illustrated herein are advantageously pneumatic, i.e. comprise a compressed air actuatable piston maintained in the unlocking position of the differential by means of elastic means not further described for the sake of brevity.

In particular, in such configuration, the first differential 27' is maintained in a locked configuration by means of a locking screw 53.

According to the embodiment of Figure 3, the transmission 8 comprises a first support shaft 61 integrally connected to the first power take-off 15. The first support shaft 61 is connected by means of a pair of differential mechanisms 62', 62'' to the second and third power take-offs 16, 17.

In particular, each differential mechanism 62', 62" comprises a carrier 65', 65'' adapted to carry a plurality of pins 64', 64" integral with it and a plurality of satellites 63', 63'' carried in a rotationally free manner by the respective pin 64', 64'' . In particular, the pins 64' of the first differential mechanism 62' are configured to mesh with a toothing made on the first support shaft 61.

Each differential mechanism 62', 62'' comprises a pair of gear wheels 66', 67', 66", 67" each configured to mesh with the satellites 63', 63'' . In particular, a first gear wheel 67' of the first differential mechanism 62' is carried integrally in rotation by a gear wheel 68 carried in a rotationally free manner by the first support shaft 61 and configured to mesh with a toothing made on the carrier 65'' of the second differential mechanism 62".

A second gear wheel 67' of the first differential mechanism 62' is carried integral with the rotation by a second support shaft 69 rigidly connected to the second power take-off 17.

The carrier 65" of the second differential mechanism 62" is adapted to define a housing for the satellites 63" and the gear wheels 66" , 67'' comprised by it and is operatively connected to a third support shaft 75 rigidly connected to the third power take-off 17.

In particular, a first gear wheel 66" of the second differential mechanism 62' is carried integral with the rotation by a fourth support shaft 71 integrally connected to the fourth power take-off 19.

On the other hand, a second gear wheel 67'' of the second differential mechanism 62" is carried integral with the rotation by a fifth support shaft 72 adapted to carry a gear wheel 73 meshing with a toothing 74 for transmitting torque to the second axle 2b.

In particular, the fifth support shaft 72 is coaxial and externally supported about the fourth support shaft 71.

It should be noted that the second support shaft 69 extends along the axis A above the second axle 2b so as to operatively connect the first and third power take-offs 15, 17. Likewise, the fourth support shaft 71 extends along the axis B coplanar to a longitudinal axis of the axle 2b so as to operatively connect second and fourth power take-offs 16, 18 which are arranged on opposite sides with respect to the axle 2b.

Therefore, advantageously, the second and the fourth support shafts 69, 71 are parallel to each other and the second support shaft 69 is placed vertically above the fourth support shaft 71.

The transmission 8 also comprises locking means 50 configured to lock the first and/or second differential mechanism 62', 62'' . In particular, the locking means 50 are housed in the space 7.

Very briefly, the locking means 50 comprise a sleeve 51 actuated by actuator means 52 and configured to cooperate in contact with an element of the differential 62', 62" for locking the function thereof, i.e. for making each element thereof rotate at the same speed.

In the illustrated exemplifying embodiment, the locking means 50 for the first differential mechanism 62' comprise a movable sleeve 51 so as to assume a first condition in which it does not cooperate with the carrier 65' and a second condition in which it cooperates with the carrier 65' for making it selectively integral with the second gear wheel 67' .

Whereas, the locking means 50 for the second differential mechanism 62" comprise a movable sleeve 51 so as to assume a first condition in which it does not cooperate with the carrier 65'' and a second condition in which it cooperates with the carrier 65" for making it selectively integral with the second gear wheel 67".

The actuator means 52 illustrated herein are advantageously pneumatic, i.e. comprise a compressed air actuatable piston maintained in the unlocking position of the differential by means of elastic means not further described for the sake of brevity.

In particular, in such configuration, the first differential 62' is maintained in a locked configuration by means of a locking screw 53.

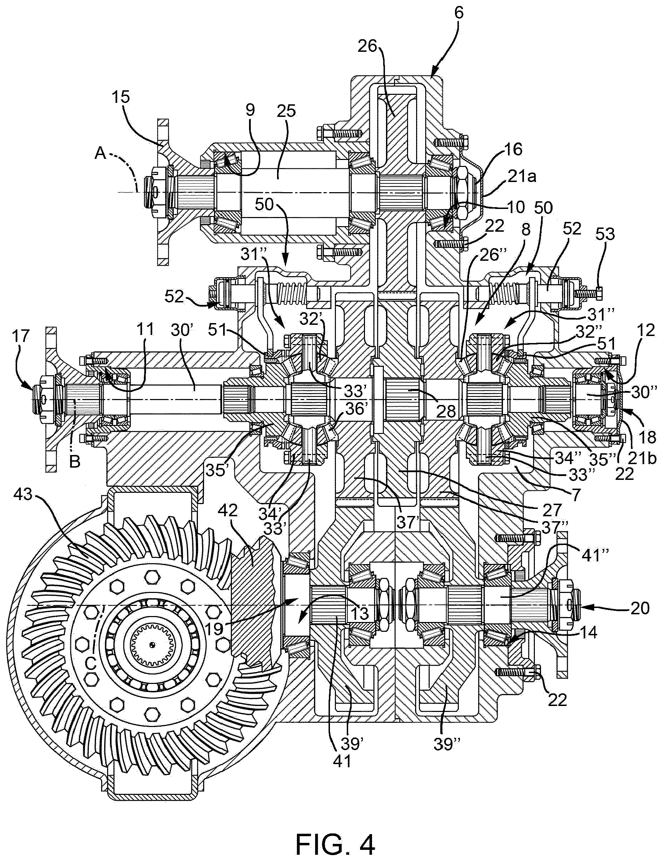

In the embodiment of Figures 4, 5 and 6 the vehicle comprises three drive axles 2a, 2b and 2c. Consequently, with respect to the embodiment of Figures 1, 2 and 3, the fourth power take-off 18 is connected to a third rotating shaft 4c which connects the transmission 8 to the third axle 2c. The connection of the third rotating shaft 4c with the axle shafts of the third axle 2c can be made as described above for the second axle 2b.

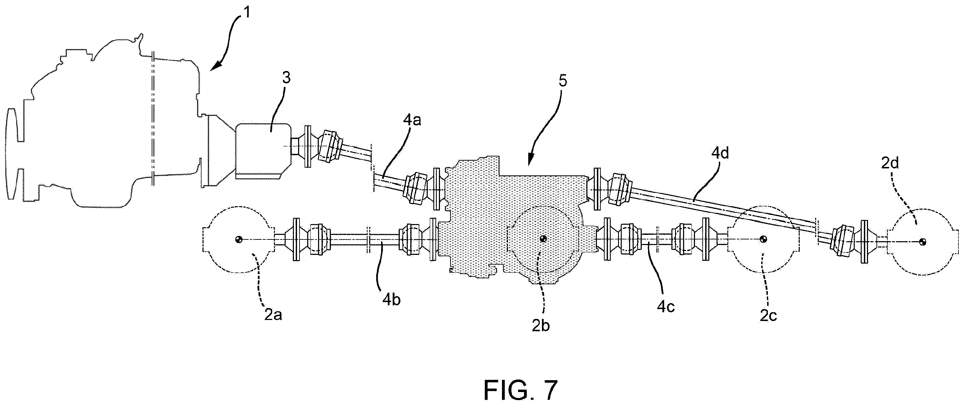

In the embodiment of Figures 7, 8 and 9, the vehicle comprises four drive axles 2a, 2b, 2c and 2d. Consequently, with respect to the embodiment of Figures 1, 2 and 3, the fourth power take-off 18 is connected to a third rotating shaft 4c which connects the transmission 8 to the third axle 2c and the second power take-off 16 is connected to a fourth rotating shaft 4d which connects the transmission 8 to the fourth axle 2d. The connection of the third and fourth rotating shafts 4c, 4d with the axle shafts of the third and fourth axles 2c, 2d can be made as described above for the second axle 2b. In such configuration, the first differentials 27', 62' are free to be locked, i.e. are not locked by the screw 53 as in the preceding embodiments.

The wheels described in the preceding description have straight teeth and are carried by the respective shafts, as described, in a known manner for example by means of driving, bushes or other forms of connection integral with or free with respect to the rotation. Clearly, even if not expressly described, all the shafts are carried in a rotatable manner by the casing by means of rolling elements such as bearings in different mounting configurations.

The operation of the above-described embodiments is as follows.

In the embodiment of Figure 2, the torque generated by the power source 1 is transmitted through the rotating shaft 4a at the first power take-off 15 to the first support shaft 25. Here the torque is provided to the carrier 27' of the first differential mechanism 26' which provides torque to the gear wheels 31' and 32' . Respectively, the latter provide torque to the support shaft 33, integral with the second power take-off 16 and to the support shaft 38, which by means of the gear 41 brings the torque to the shaft 43 and thus to the fourth power take-off 18. Parallelly, the carrier 27' meshes with the carrier 27" of the second differential mechanism 26" providing torque to the gear wheels 31" and 32'' which respectively drive the shaft 34, integral with the second power take-off 34 and the shaft 35 integral with the gear wheel 36 which drives the second axle 2b. It should be noted that, in the present case, the second and fourth power take-off 16, 18 rotate idle and protected by the respective covers 21a, 21b, whereas the third power take-off is connected by means of the second rotating shaft 4b to the first axle 2a which results driving.

If necessary, the locking means 50 can be activated for the second differential mechanism 26" so as to make the shafts and/or 34 and 39 rotate at the same speed, whereas the first mechanism 26' is maintained locked by the screw 53.

In the embodiment of Figure 3, the torque generated by the power source 1 is transmitted through the rotating shaft 4a at the first power take-off 15 to the first support shaft 61. From here, the torque is transmitted to the pins 63' of the first differential mechanism 62' which bring in rotation the gear wheels 66' and 67'. The latter drives the shaft 69 which is rigidly connected to the second power take-off 16. Whereas, the toothing 66' drives the gear wheel 68 which meshes with the carrier 65" of the second differential mechanism 62" which drives the two gear wheels 66'', 67" thereof, which respectively drive the shaft 75, integral with the fourth power take-off 17 and the shaft 72 which by means of the toothing 73 provides torque to the second axle 2b. Parallelly, the carrier 65" drives the shaft 75 rigidly connected to the third power take-off 17.

It should be noted that, in the present case, the second and fourth power take-off 16, 18 rotate idle and protected by the respective covers 21a, 21b, whereas the third power take-off is connected by means of the second rotating shaft 4b to the first axle 2a which results driving.

If necessary, the locking means 50 can be activated for the second differential mechanism 26" so as to make the shafts 34 and 35 rotate at the same speed, whereas the first mechanism 26' is maintained locked by the screw 53.

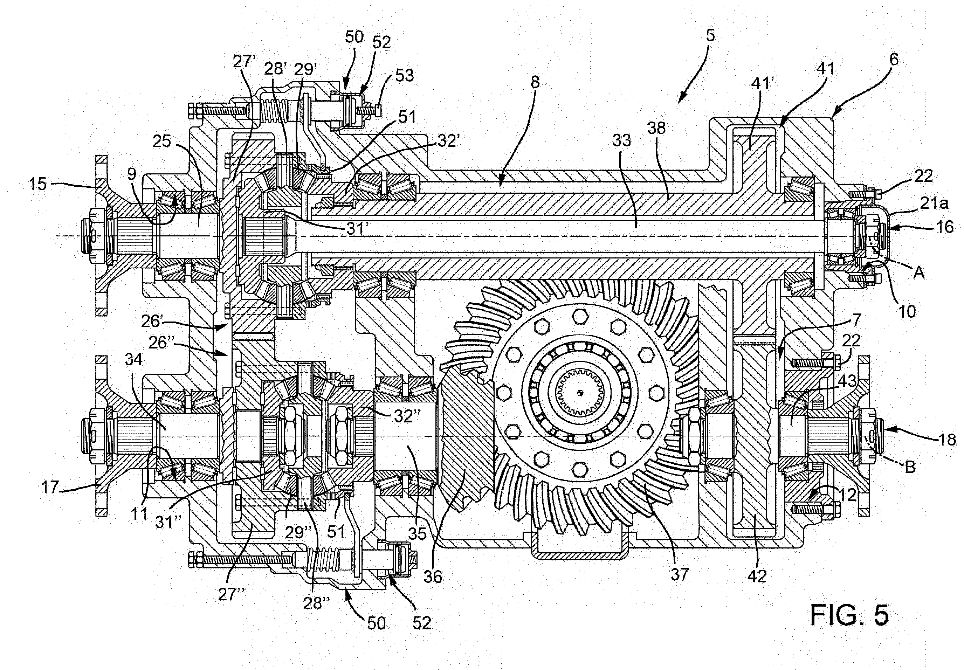

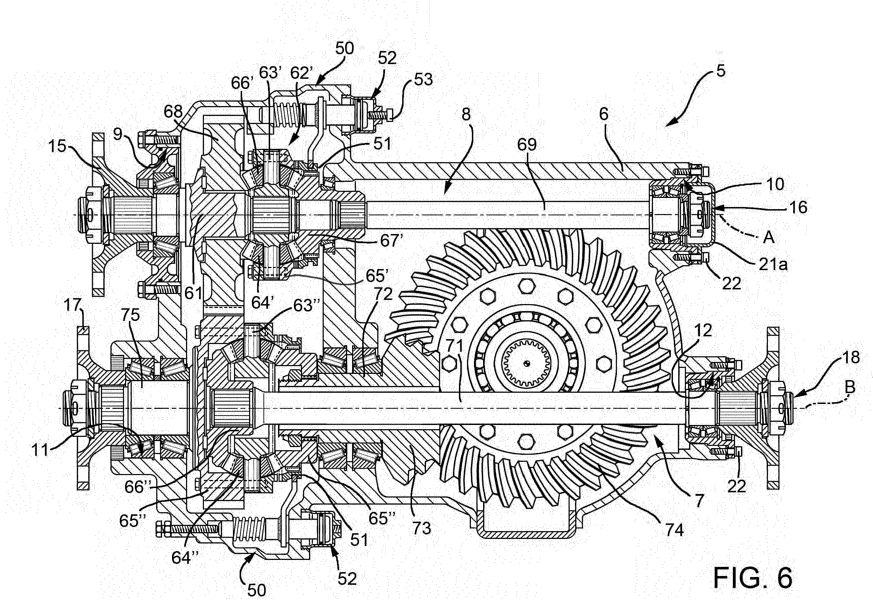

In the embodiment of Figures 5 and 6, the fourth power take-off 18 is connected by means of the third rotating shaft 4c to a third drive axle 2c and the torque is provided according to what described in the foregoing by the second power take-off. The operation is otherwise similar to what described relative to Figures 2 and 3.

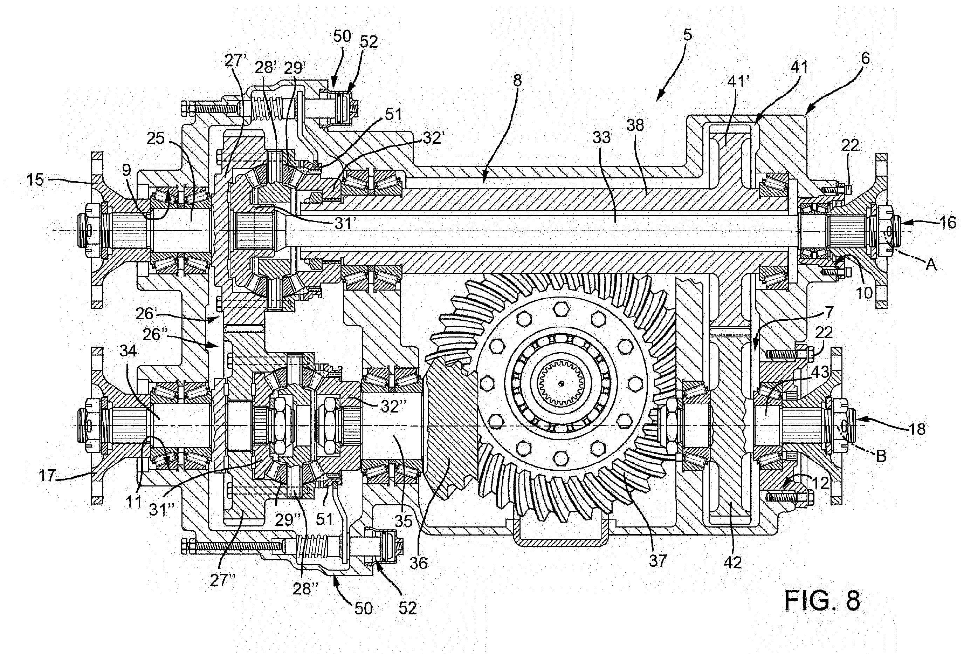

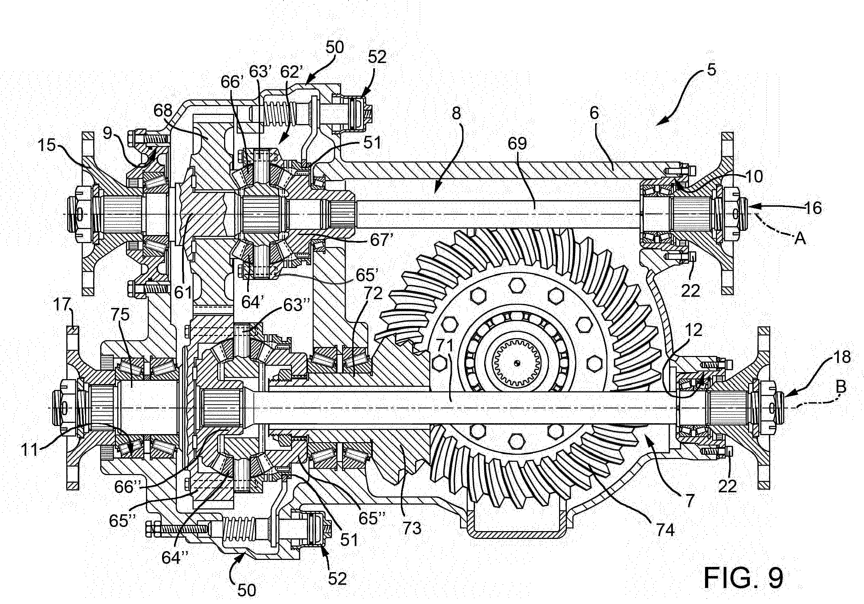

In the embodiment of Figures 8 and 9, in addition to what described for Figures 5 and 6, the second power take-off 16 is connected by means of the fourth rotating shaft 4d to a fourth drive axle 2d and the torque is provided according to what described in the foregoing by the second power take-off. The operation is otherwise similar to what described relative to Figures 2 and 3.

Based on the foregoing, the advantages of a torque distributor system according to the invention are evident.

The proposed distributor system allows the distribution in a versatile manner to different axles of a vehicle enabling obtaining, with the same system, different vehicle configurations of drive axles.

Therefore, the distributor system according to the invention is particularly versatile, i.e. is suitable for a large variety of purposes reducing the manufacturing costs and allowing a high customization of the vehicle.

Furthermore, the fact that the transmission is housed inside a single space and the fact that the power take-offs can be isolated when they are not used, increases the useful life of the transmission.

The use of one or more differentials further allows having axles with equal traction utilizable in the conditions required by specific loading and/or ground situations.

Furthermore, the particular arrangement of the shafts overriding the axle interposed between the two parts of the transmission allows obtaining a particularly compact distributor.

Finally, it is clear that modifications and variations can be made to the torque distributor system according to the present invention which however do not depart from the scope of protection defined by the claims.

Clearly, further mechanical elements not described for the sake of brevity can be provided.

The reduction module and the differential mechanisms or the locking means could comprise elements of different shape.

Similarly, the arrangement of the power take-offs could vary and further reduction stages between each other could be provided.

The system could further comprise only one differential mechanism or not comprise any at all.

Clearly, although gear wheels having straight teeth have been described, different types of gear wheels and of teeth could be present. Still, further constructive elements omitted from the description and schematized in the drawings for the sake of brevity, could be present so as to enable the correct mounting of shafts and gear wheels.

## Claims

1. Torque distributor system (5) for distributing the torque coming from a power source (1) of a vehicle to a plurality of axles (2a, 2b, 2c, 2d) of said vehicle,
said distributor system (5) comprising a casing (6) adapted to define a space (7) configured to house a transmission (8), said casing (6) defining a plurality of openings (9, 10, 11, 12) configured to house respective power take-offs (15, 16, 17, 18) connected to each other by said transmission (8), a first power take-off (15) of said power take-offs (15, 16, 17, 18) being connectable to said power source (1) and at least a second (19) of said power take-offs (15, 16, 17, 18) being connectable to one or more of said axles (2a, 2b, 2c, 2d), said power take-offs (15, 16, 17, 18) being coaxial in pairs along respective axes (A, B), and being in pairs arranged on opposite sides to one of said axles (2a, 2b, 2c, 2d).

2. System according to claim 1, wherein said transmission (8) comprises a first differential mechanism (26') operatively interposed between said first power take-off (15), a second and a fourth power take-off (16, 18).

3. System according to claim 2, wherein said transmission (8) comprises a second differential mechanism (26") operatively interposed between said first differential mechanism and a third power take-off (17).

4. System according to claim 3, wherein said second differential mechanism (26'') is operatively interposed to said one or more of said axles (2a, 2b, 2c, 2d).

5. System according to claim 2, comprises a first support shaft (25) rigidly connected to a carrier (27') of said first differential mechanism (26') and to said a first power take-off (15), a first gear wheel (31') driven by satellites (29') carried by said carrier (27') being carried integral with the rotation by a second support shaft (33) rigidly connected to said second power take-off (16).

6. System according to claim 5, wherein a second gear wheel (32') driven by said satellites (29') being carried integral with the rotation by a third support shaft (38) operatively connected to said fourth power take-off (18).

7. System according to claim 6, wherein said third support shaft (38) is connected by means of a gear (41) to a fourth support shaft (43) rigidly connected to said fourth power take-off (18).

8. System according to claim 6 or 7, wherein said third and second support shafts (33, 38) are coaxial to each other.

9. System according to claim 8, wherein said third support shaft (38) is externally coaxial to said second support shaft (33).

10. System according to one of claims 6 to 9, wherein said second and third support shafts (33, 38) are carried vertically above said one of said axles (2a, 2b, 2c, 2d).

11. System according to one of claims 3 to 10, wherein a first gear wheel (31'') driven by satellites (29") carried by said carrier (27") of said second differential mechanism (26') being carried integral with the rotation by a fourth support shaft (34) rigidly connected to said third power take-off (17).

12. System according to claim 11, wherein a second gear wheel (32'') driven by said satellites (29") being carried integral with the rotation by a fifth support shaft (35) operatively connected to said one of said axles (2a, 2b, 2c, 2d).

13. System according to claim 1, wherein said transmission (8) comprises a first differential mechanism (62') operatively interposed between said first power take-off (15) and a second power take-off (16).

14. System according to claim 13, wherein said transmission (8) comprises a second differential mechanism (62") operatively interposed between said first differential mechanism (62'), a third and a fourth power take-off (17, 18).

15. System according to claim 14, wherein said second differential mechanism (62'') is operatively interposed to said one or more of said axles (2a, 2b, 2c, 2d).

16. System according to claim 13, wherein said first differential mechanism (62') comprises a carrier (65') driving pins (63') supporting a plurality of satellites (64'), said pins (63') meshing with a first support shaft (61) rigidly connected to said first power take-off (15), a first gear wheel (67') being driven by said satellites (64') and carried integrally by a second support shaft (69) rigidly connected to said second power take-off (16).

17. System according to claim 16, wherein a second gear wheel (66') driven by said satellites (64') being carried integrally by a gear wheel (68) carried integrally free by said first support shaft (61), said gear wheel (68) meshing with the carrier (65'') of said second differential mechanism (62").

18. System according to claim 17, wherein said carrier (65") is rigidly connected to said third power take-off (17) .

19. System according to one of claims 15 to 17, wherein a first gear wheel (66") driven by satellites (64'') carried by said carrier (65") of said second differential mechanism (62") being carried integral with the rotation by a third support shaft (71) rigidly connected to said fourth power take-off (18).

20. System according to claim 19, wherein a second gear wheel (67") driven by said satellites (64'') being carried integral with the rotation by a support shaft (72) operatively connected to said one of said axles (2a, 2b, 2c, 2d) .

21. System according to one of claims 16 and 19, wherein said second and third shafts (69, 71) rigidly connected to said second and fourth power take-offs (16, 18) being parallel to each other.

22. System according to claim 21, wherein one of said second and third shafts (69, 71) being placed vertically above said one of said axles (2a, 2b, 2c, 2d), the other of said second and third shafts (69, 71) being placed vertically below said one of said axles (2a, 2b, 2c, 2d).

23. System according to one of the preceding claims when dependent on claims 2 to 22, wherein said transmission (8) comprises locking means (50) for locking said differential mechanisms (26, 28).

24. Vehicle comprising a power source (1) capable of generating torque, a plurality of axles (2a, 2b, 2c, 2d) and a torque distributor (5) operatively interposed between said power source (1) and said axles (2a, 2b, 2c, 2d), said torque distributor (5) being made according to one of the preceding claims.
